# EUROPEAN PATENT APPLICATION

(11) **EP 2 431 437 A1**
(43) Date of publication of application: **21.03.2012**
(21) Application number: 11181786.2
(22) Date of filing: 19.09.2011
(51) Int. Cl.: C09J 7/02

(54) **Pressure-sensitive adhesive sheet**

(30) Priority: 20.09.2010 JP 2010210285
(71) Applicant: NITTO DENKO CORPORATION, Osaka (JP)
(72) Inventor: Nakagawa, Yoshio, Ibaraki-shi, Osaka (JP); Yamamoto, Yasunori, Ibaraki-shi, Osaka (JP); Uesugi, Masanori, Ibaraki-shi, Osaka (JP); Oosawa, Yuka, Ibaraki-shi, Osaka (JP)
(74) Representative: Grünecker, Kinkeldey, Stockmair & Schwanhäusser

(57) **Abstract**

The present invention relates to a pressure-sensitive adhesive sheet containing: a substrate layer comprising a film which contains at least a urethane polymer in a preferred embodiment a (meth)acrylic polymer and a urethane polymer, and a pressure-sensitive adhesive layer, in which the substrate layer has: (a) a work of 35 to 160 N·mm, the work being calculated from a product of a move amount and a stress until 10% elongation when the substrate layer is elongated at a tensile speed of 200 mm/min; and (b) a stress relaxation time of 30 sec or less, the stress relaxation time being a time for which the stress, after the substrate layer is elongated until 10% at a tensile speed of 200 mm/min and the elongation is held in that state, decreases to 36.8% of the maximum stress.

## Description

### TECHNICAL FIELD

The present invention relates to a pressure-sensitive adhesive sheet having a substrate equipped with a film containing at least a urethane polymer, and particularly, to a pressure-sensitive adhesive sheet having excellent adhesion workability and fitting performance to bending portion.

### BACKGROUND ART

Films containing a urethane polymer are known as a film capable of achieving a good balance between high strength and high breaking elongation (see, for example, Patent Documents 1 to 3). These films themselves have toughness with high strength, high breaking elongation, etc. However, in the case of using the films as a substrate of a pressure-sensitive adhesive sheet for protection of coating surface such as automotive coating surfaces, it is required that the films should be adhered so that bubbles or wrinkles are not formed while fitting coated surfaces of automobiles having various shapes, and that an end of the film is not lifted off when the film is adhered to bending portions. Such films are required to have appropriate flexibility, elongation, strength, and the like, but no pressure-sensitive adhesive sheet that can satisfy these properties and be applied as a protective sheet for protecting a coating surface for vehicles has yet been made.

Patent Document 1: JP-A-2003-96140
Patent Document 2: JP-A-2003-171411
Patent Document 3: JP-A-2004-10661

### SUMMARY OF THE INVENTION

The present invention has been made for the purpose of solving the above mentioned problems. An object of the present invention is to provide a pressure-sensitive adhesive sheet having excellent adhesion workability and fitting performance to bending portion.

The pressure-sensitive adhesive sheet according to the present invention comprising:
a substrate layer comprising a film which contains at least a urethane polymer; and
a pressure-sensitive adhesive layer,
wherein the substrate layer has:
   (a) a work of 35 to 160 N·mm, the work being calculated from a product of a move amount and a stress until 10% elongation when the substrate layer is elongated at a tensile speed of 200 mm/min; and
   (b) a stress relaxation time of 30 sec or less, the stress relaxation time being a time for which the stress, after the substrate layer is elongated until 10% at a tensile speed of 200 mm/min and the elongation is held in that state, decreases to 36.8% of the maximum stress.

In the present invention, the film is preferably a composite film containing a (meth)acrylic polymer and a urethane polymer

Furthermore, it is preferred that the above (meth)acrylic polymer comprises: a (meth)acrylic component containing at least a (meth)acrylic acid monomer, and a monofunctional (meth)acrylic monomer in which a glass transition temperature (Tg) of a homopolymer thereof is 273 K or more; and a polyfunctional monomer, wherein the polyfunctional monomer is contained in an amount of 10 to 20 parts by weight on the basis of 100 parts by weight of the (meth)acrylic component, and
wherein the urethane polymer comprises a diol component and a diisocyanate component, and contains isophorone diisocyanate as the diisocyanate component.

Furthermore, it is preferred that a content of the (meth)acrylic acid monomer is 0.5 wt% or more and 15 wt% or less in the composite film. And it is also preferred that the monofunctional (meth)acrylic monomer in which a glass transition temperature (Tg) of a homopolymer thereof is 273 K or more is isobornyl acrylate.

Moreover, it is preferred that a weight ratio of the (meth)acrylic polymer and the urethane polymer is in a range of from 30/70 to 70/30.

In the present invention, it is preferred that the substrate layer has a surface coating layer containing any one of fluorine resin, urethane resin, (meth)acryl resin, and (meth)acrylic monomer, on at least one surface.

In the present invention, it is preferred that an application sheet is provided on at least one side of the pressure-sensitive adhesive sheet.

In the present invention, the pressure-sensitive adhesive sheet is preferably used as a protective sheet for protecting a surface of an adherend, and in particular preferably, used as a protective sheet for protecting a coating surface of transport machinery.

According to the present invention, it is possible to realize a pressure-sensitive adhesive sheet having excellent adhesion workability and fitting performance to bending portion. In particular, since this pressure-sensitive adhesive sheet has excellent adhereability to a coating surface having complicated shapes, the sheet can be easily applied without including wrinkles or bubbles. Further, since this pressure-sensitive adhesive sheet has excellent fitting performance to bending portion, an end of the film is not lifted off when the sheet is adhered to a bending portion. Therefore, for example, the sheet can be used as a protective sheet for protecting a surface of an adherend. In particular, the sheet can be used for the purpose of protecting a surface of an article used at the outdoors, and particularly, can be appropriately used as a protective sheet for protecting a coating surface for transport machinery.

### BRIEF DESCRIPTION OF THE DRAWINGS

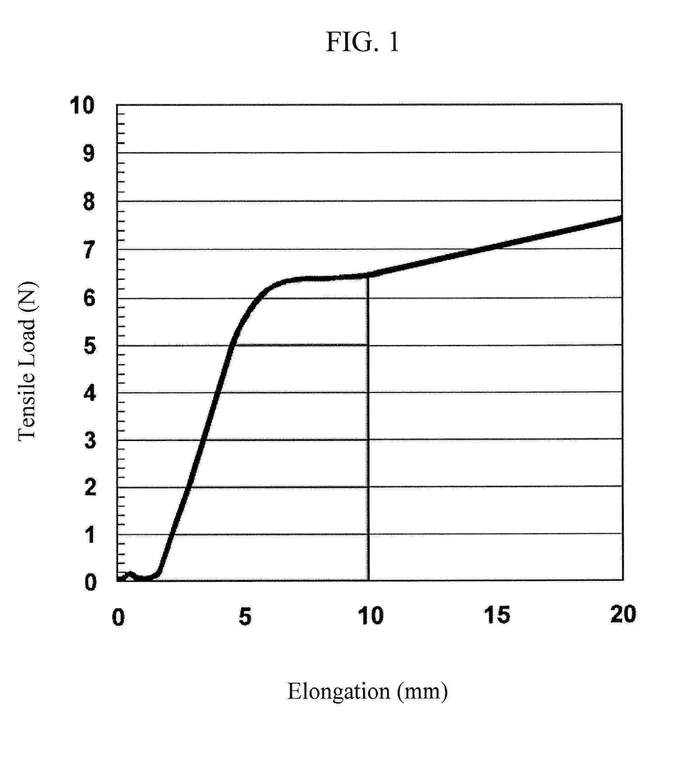

FIG. 1 is an S-S curve showing a relationship between elongation and strength obtained in a tensile test of the substrate layer of Example, and a view showing a concept of work.

### MODES FOR CARRYING OUT THE INVENTION

Hereinafter, the present invention will be described in detail.
The pressure-sensitive adhesive sheet according to the present invention comprises a substrate layer equipped with a film which contains at least a urethane polymer, and a pressure-sensitive adhesive layer. The substrate layer is a substrate layer having: (a) a work of 35 to 160 N·mm in which the work is calculated from a product of move amount and a stress until 10% elongation where the substrate layer is elongated at a tensile speed of 200 mm/min; and (b) a stress relaxation time of 30 sec or less, in which the stress relaxation time is a time for which the stress, after the substrate layer is elongated until 10% at a tensile speed of 200 mm/min and the elongation is held in that state, decreases to 36.8% of the maximum stress. The (a) work and (b) stress relaxation time will be described below.

The substrate layer contained in the pressure-sensitive adhesive sheet of the present invention has a film containing at least a urethane polymer, and this film is preferably a composite film.
This composite film is a film containing at least a urethane polymer, and may be a film of either the urethane polymer alone or a film further containing another polymer. In the present invention, the composite film preferably contains a (meth)acrylic polymer and a urethane polymer. In this case, a weight ratio of the (meth)acrylic polymer and the urethane polymer in the composite film, (meth)acrylic polymer/urethane polymer, is preferably 30/70 to 70/30, and more preferably 40/60 to 60/40. If the weight ratio is lower than 30/70, the mixture of the (meth)acrylic polymer and urethane polymer may have high viscosity such that it is difficult to form a film, or the obtained film may have an excessive flexibility and thus have large tensile elongation such that workability is impaired. If the weight ratio exceeds 70/30, the film itself may have poor flexibility and thus have insufficient tensile elongation in adhesion operations, such that workability is impaired.

In the present invention, the (meth)acrylic polymer is preferably formed from a composition containing: a (meth)acrylic component containing at least a (meth)acrylic acid monomer, and a monofunctional (meth)acrylic monomer in which a glass transition temperature (Tg) of a homopolymer of the monofunctional (meth)acrylic monomer is 273 K or more; and a polyfunctional monomer. Further, in the present invention, it is preferred that the acrylic component further contains a monofunctional (meth)acrylic monomer in which the glass transition temperature (Tg) of the homopolymer thereof is lower than 273K.

In the present invention, the (meth)acrylic acid monomer means a (meth)acrylic monomer having a carboxyl group, and examples thereof include acrylic acid, methacrylic acid, maleic acid, crotonic acid, and the like. Especially preferred of these is acrylic acid. In the present invention, the content of the (meth)acrylic acid monomer is preferably 0.5 wt% or more and 15 wt% or less, and more preferably 2 wt% or more and 10 wt% or less in the composite film. If the content of the (meth)acrylic acid monomer is lower than 0.5 wt%, since reaction requires a prolonged time period, film formation is exceedingly difficult. In addition, the resultant film may have insufficient strength. If the content of the (meth)acrylic acid monomer exceeds 15 wt%, the film may have increased water absorption to cause a problem concerning water resistance. In the case where the composite film contains a (meth)acrylic polymer and a urethane polymer, in the present invention, the (meth)acrylic acid monomer considerably influences compatibility between the urethane polymer and the (meth)acrylic polymer, and is an essential component which performs a very important function.
As used herein, the term "film" means a concept which includes a sheet, while the term "sheet" means a concept which includes a film. As used herein, the expression "(meth)acrylic" such as "(meth)acrylic polymer" or "(meth)acrylic acid monomer" means a concept which includes both "methacrylic" and "acrylic". In the case where the expression "acrylic" is used, this means a concept also including "methacrylic" unless this concept causes any problem from a commonsense standpoint.

In the present invention, examples of the monofunctional (meth)acrylic monomer, in which a Tg of the homopolymer thereof is 273 K or higher, include acryloylmorpholine, isobornyl acrylate, dicyclopentanyl acrylate, t-butyl acrylate, cyclohexyl acrylate, lauryl acrylate, and the like. These monomers may be used either alone or in combination of two or more thereof.

As the monofunctional (meth)acrylic monomer, in which a Tg of the homopolymer thereof is 273 K or higher, in the present invention, it is preferred to use at least one monomer selected from the group consisting of acryloylmorpholine, isobornyl acrylate, and dicyclopentanyl acrylate. It is more preferred to use acryloylmorpholine and/or isobornyl acrylate or to use acryloylmorpholine and/or dicyclopentanyl acrylate, and it is especially preferred to use isobornyl acrylate.

The content of the monofunctional (meth)acrylic monomer, in which a Tg of the homopolymer thereof is 273 K or higher, is preferably 20 wt% or more and 99 wt% or less, and more preferably, 30 wt% or more and 98wt% or less, based on the (meth)acrylic component. If the content of the monofunctional (meth)acrylic monomer is lower than 20 wt%, it may cause a problem that the film has insufficient strength. If the content thereof exceeds 99 wt%, the film may be too rigid and thus become brittle.

In the present invention, examples of the monofunctional (meth)acrylic monomer, in which a Tg of the homopolymer thereof is lower than 273 K, include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, 3-methoxybutyl acrylate, and the like. These monomers may be used either alone or in combination of two or more thereof.
In the present invention, n-butyl acrylate is especially preferably used as the monofunctional (meth)acrylic monomer, in which a Tg of the homopolymer thereof is lower than 273 K.

The monofunctional (meth)acrylic monomer, in which a Tg of the homopolymer thereof is lower than 273 K, need not be contained (the content thereof may be 0 wt%). However, when this monofunctional (meth)acrylic monomer is contained, the content thereof is preferably more than 0 wt% and 50 wt% or less, and is more preferably, more than 0 wt% and 45 wt% or less, based on the (meth)acrylic component. When the content of this monofunctional (meth)acrylic monomer exceeds 50 wt%, it may cause a problem that the film has insufficient strength.

In the present invention, the polyfunctional monomer is a monomer that has two or more radical-polymerizable unsaturated groups in one molecule, and examples thereof include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylates, epoxy acrylates, polyester acrylates, and the like, and especially preferred is trimethylolpropane tri(meth)acrylate.

The polyfunctional monomers can be contained in an amount of 10 parts by weight or more and 20 parts by weight or less, and preferably 12 parts by weight or more and 18 parts by weight or less, per 100 parts by weight of the (meth)acrylic component. If the content of polyfunctional monomers is 10 parts by weight or more, the composite film has sufficient force required in the adhesion operation. If the content thereof is 20 parts by weight or less, the elastic modulus of the composite film does not become too high and the composite film can fit to irregularities of the adherend surface.

The kinds, combinations and used amount of the (meth)acrylic monomers are suitably decided by taking into consideration its compatibility with urethane, polymerization ability at the time of photo-curing with a radioactive ray or the like, and characteristics of the obtained polymer.

In the present invention, the following monomers can be copolymerized with the (meth)acrylic component described above: vinyl acetate, vinyl propionate, styrene, acrylamide, methacrylamide, mono- or diesters of maleic acid and derivatives thereof, N-methylol acrylamide, glycidyl acrylate, glycidyl methacrylate, N,N-dimethyl aminoethyl acrylate, N,N-dimethyl aminopropyl methacrylamide, 2-hydroxypropyl acrylate, N,N-dimethyl acrylamide, N,N-diethyl acrylamide, imido acrylates, N-vinylpyrrolidone, oligoester acrylates, ε-caprolactone acrylate, dicyclopentanyl (meth)acrylate, dicyclopentenyl (meth)acrylate, methoxylated cyclododecatriene acrylate, methoxyethyl acrylate, and the like. The kinds or used amount of such monomers to be copolymerized may be suitably determined by taking into consideration the properties of the composite film.

The urethane polymer can be obtained by reaction of a polyol (especially, diol) with a polyisocyanate (especially, diisocyanate). A catalyst is generally used in the reaction of the hydroxyl group of polyol with the isocyanate group of polyisocyanate, but according to the present invention, the reaction can be accelerated without using a catalyst which causes environmental load, such as dibutyl tin dilaurate and tin octenoate.

Examples of low-molecular weight polyols include dihydric alcohols such as ethylene glycol, diethylene glycol, propylene glycol, butylene glycol and hexamethylene glycol.

Examples of high-molecular weight polyols include polyether polyols obtained by addition polymerization of ethylene oxide, propylene oxide, tetrahydrofuran, or the like; polyester polyols which are polycondensation products of an alcohol such as any of the above mentioned dihydric alcohols, 1,4-butanediol, and 1,6-hexanediol, with a dibasic acid such as adipic acid, azelaic acid or sebacic acid; acrylic polyols; carbonate polyols; epoxy polyols; caprolactone polyols; and the like. Preferred of these are, for example, polyoxytetramethylene glycol (PTMG), poly(alkylene carbonate) diols (PCD), and the like.

Examples of the acrylic polyols include copolymers of monomers having a hydroxyl group, copolymers of a hydroxyl-containing substance and an acrylic monomer, and the like. Examples of the epoxy polyols include amine-modified epoxy resins and the like.

In the present invention, those polyols can be used either alone or in combination thereof by taking into consideration the solubility in the acrylic monomers, and the reactivity with the isocyanate, etc. In the case where strength is required, it is effective to increase the amount of hard urethane segments by using a low-molecular polyol. In the case where elongation is important, a polyol (especially, diol) having a high molecular weight is preferably used alone. Polyether polyols generally are inexpensive and have good water resistance, while polyester polyols have high strength. In the present invention, the kind and amount of polyol can be freely selected according to uses and purposes, and further, the kind, molecular weight and amount of polyol can be suitably selected from the standpoints of the properties of the substrate to be coated, reactivity with isocyanate, and compatibility with acrylic polymer.

In the present invention, isophorone diisocyanate is preferably used as diisocyanate. There are advantages in that it is possible to obtain a urethane polymer having excellent breaking strength, excellent transparency and heat resistance by using isophorone diisocyanate.
It is not clear the reason why the above-mentioned specific effect is obtained by using isophorone diisocyanate, but it is deemed that the number of carbon atoms existing between two isocyanate groups of isophorone diisocyanate contributes to the effect. That is, it is deemed that isophorone diisocyanate has four carbon atoms between the two isocyanate groups, and when a network is formed by curing, the less the number of carbon atoms between two isocyanate groups is, the higher the cross-linking density is, thereby achieving a high strength characteristic. Furthermore, isophorone diisocyanate has a structure in which three methyl groups are bound to the cyclohexane ring, which is deemed to provide a high steric hindrance, and even though elongation is implemented, the network is hardly broken up, and therefore, it is possible to achieve high elongation even in the tensile elongation.

In the present invention, any polyisocyanate (diisocyanate) other than isophorone diisocyanate may be used so long as performance of the pressure-sensitive adhesive sheet of the present invention is satisfied. Examples of the polyisocyanate (diisocyanate) include aromatic, aliphatic and alicyclic diisocyanates, and the dimers and trimers of these diisocyanates, and the like. Examples of the aromatic, aliphatic and alicyclic diisocyanates include tolylene diisocyanate, diphenylmethane diisocyanate, hexamethylene diisocyanate, xylylene diisocyanate, hydrogenated xylylene diisocyanate (HXDI), hydrogenated diphenylmethane diisocyanate, 1,5-naphthylene diisocyanate, 1,3-phenylene diisocyanate, 1,4-phenylene diisocyanate, butane 1,4-diisocyanate, 2,2,4-trimethylhexamethylene diisocyanate, 2,4,4-trimethylhexamethylene diisocyanate, cyclohexane 1,4-diisocyanate, dicyclohexylmethane 4,4-diisocyanate, 1,3-bis(isocyanatomethyl)cyclohexane, methylcyclohexane diisocyanate, m-tetramethylxylylene diisocyanate, and the like. The dimers and trimers of these diisocyanates and polyphenylmethane diisocyanate thereof may also be used. Examples of the trimers include the isocyanurate type, biuret type, allophanate type, and the like and these isocyanates can be arbitrarily used.

These polyisocyanates can be used either alone or in combination thereof. The kinds of polyisocyanates, and a combination thereof, may be suitably selected from the standpoints of the properties of a substrate to which the composite film is applied (which is to be coated), solubility in the acrylic monomers, and reactivity with hydroxyl groups.

In the present invention, as for the amounts of the polyol (diol) component and polyisocyanate (diisocyanate) component to be used for forming the urethane polymer, the amount of the diol component to be used relative to the isocyanate component amount is such that the ratio of NCO/OH (equivalent ratio) is preferably 1.1 or more and 2.0 or less, and more preferably 1.15 or more and 1.35 or less. In the case where the ratio of NCO/OH (equivalent ratio) is smaller than 1.1, since the viscosity of the mixture including the urethane polymer is increased, it tends to be difficult to form a film, or since the obtained film has excessively high flexibility, tensile elongation is large, such that it is easy to decrease workability. If the ratio of NCO/OH (equivalent ratio) is 2.0 or less, elongation and flexibility can be sufficiently ensured.

To the urethane polymer, a hydroxyl-containing acrylic monomer may be added. By adding a hydroxyl-containing acrylic monomer, a (meth)acryloyl group can be introduced into a molecular end of the urethane prepolymer and copolymerizability with the acrylic monomers may be imparted thereto, and as a result, compatibility between the urethane polymer and the (meth)acrylic polymer may be enhanced, such that an improvement in S-S characteristics such as a breaking strength can also be attained. Examples of the hydroxyl-containing acrylic monomer include hydroxyethyl (meth)acrylate, hydroxypropyl (meth)acrylate, hydroxybutyl (meth)acrylate, and hydroxyhexyl (meth)acrylate. The amount of the hydroxyl-containing acrylic monomer used is preferably 0.1 to 20 parts by weight, and more preferably 1 to 10 parts by weight, per 100 parts by weight of the urethane polymer.

In the present invention, in the case of the composite film containing the (meth)acrylic polymer and the urethane polymer, the composite film preferably has a heterogeneous network structure in which the urethane polymer and the (meth)acrylic polymer are bound to each other by means of a graft structure or cross-linked structure. In the case of an IPN structure (interpenetrating polymer network layer) in which the urethane polymer and the (meth)acrylic polymer each independently have a cross-linked structure, or the case of a semi-IPN structure in which one of the urethane polymer and (meth)acrylic polymer has a cross-linked structure and the other has linear polymer chains and has penetrated into the cross-linked structure, there are cases where the pressure-sensitive adhesive sheet is less likely to have stress relaxation when elongated. Consequently, when the composite film has such a structure, it may be necessary to improve the adhesion workability required when the pressure-sensitive adhesive sheet is used. For example, there are cases where formation of an application sheet is necessary.

The composite film or the like may contain additives in general use, for example, an ultraviolet absorber, anti-aging agent, filler, pigment, colorant, flame retardant, antistatic agent, and light stabilizer, according to need within such a range that the effect of the present invention is not spoiled. These additives may be used in ordinary amounts according to the kinds thereof. These additives may be added before the polymerization reaction of the polyisocyanate with the polyol, or may be added before the urethane polymer and the acrylic monomer are polymerized.

A small amount of solvent may be added in the present invention in order to adjust the viscosity of the coating fluid. The solvent may be suitably selected from solvents for common use, and examples thereof include ethyl acetate, toluene, chloroform, dimethyl formamide, and the like.

In the case where the composite film in the present invention is a composite film containing a (meth)acrylic polymer and a urethane polymer, this composite film may be produced, for example, in the following manner. In (meth)acrylic monomers acting as a diluent, a polyol (diol) is allowed to react with a polyisocyanate (diisocyanate) to form a urethane polymer, and a mixture containing the (meth)acrylic monomers and the urethane polymer as the main components and further containing a photopolymerization initiator is applied to a substrate (which is release-treated as necessary), and is cured by irradiation with ionizing radiation such as α-rays, β-rays, γ-rays, neutron beams, or electron beams, radioactive ray such as ultraviolet rays, visible light or the like according to the kind of the photopolymerization initiator, and the substrate is released and removed, whereby a composite film can be formed. Alternatively, the substrate is not released and removed, and the composite film can be obtained in the form of a multilayer structure including the composite film laminated on the substrate.

Specifically, a polyol (diol) is dissolved in (meth)acrylic monomers, a polyisocyanate (diisocyanate) or the like is added to the resultant solution to react the polyisocyanate (diisocyanate) with the polyol (diol), the viscosity of this reaction mixture is adjusted, and the resulting mixture is applied to a support or, as necessary, to a release-treated surface of a support, the resulting mixture applied is cured using a low-pressure mercury lamp or a metal halide lamp, thereby obtaining a composite film. In this method, the (meth)acrylic monomers may be added at a time during urethane synthesis or may be added in several times. Alternatively, a polyol (diol) may be allowed to react with a polyisocyanate (diisocyanate) after the polyisocyanate (diisocyanate) is dissolved in the (meth)acrylic monomers. According to this method, there are no limitations on molecular weight and it is possible to obtain a polyurethane having a high molecular weight, and consequently, the molecular weight of the urethane to be finally obtained can be designed so as to be any desired value.

In this case, in order to prevent polymerization inhibition by oxygen, a release-treated sheet (a separator) can be placed on the mixture applied on a support and thereby blocking oxygen or the substrate can be placed in a vessel filled with an inert gas and thereby reducing the concentration of oxygen.

In the present invention, the kind of radioactive ray and the kind of lamp for use in the irradiation can be suitably selected, and use can be made of a low-pressure lamp such as a fluorescent chemical lamp, black light, or a bactericidal lamp, or a high-pressure lamp such as a metal halide lamp or a high-pressure mercury lamp.

The irradiation amount of ultraviolet rays can be set according to the required film properties. In general, the irradiation amount of ultraviolet rays may be 100 to 5,000 mJ/cm², preferably, 1,000 to 4,000 mJ/cm², and more preferably, 2,000 to 3,000 mJ/cm². When the irradiation amount of ultraviolet rays is less than 100 mJ/cm², there are cases where a sufficient conversion is not obtained, and when the irradiation amount thereof is larger than 5,000 mJ/cm², the irradiation may cause deterioration.

The temperature of the mixture being irradiated with ultraviolet rays is not particularly limited, and can be set accordingly. However, when the temperature thereof is too high, a termination reaction due to the heat of polymerization is likely to occur, and thereby causing a decrease of properties. Therefore, the temperature thereof is generally 70°C or lower, preferably 50°C or lower, and more preferably 30°C or lower.

In the present invention, the mixture containing at least a urethane polymer (e.g., a mixture containing a urethane polymer and a (meth)acrylic monomer as main components) contains a photopolymerization initiator. As the photopolymerization initiator, examples thereof include a benzoin ether such as benzoin methyl ether or benzoin isopropyl ether, a substituted benzoin ether such as anisole methyl ether, a substituted acetophenone such as 2,2-diethoxyacetophenone or 2,2-dimethoxy-2-phenylacetophenone, a substituted α-ketol such as 1-hydroxy-cyclohexyl-phenyl-ketone or 2-methyl-2-hydroxypropiophenone, an aromatic sulfonyl chloride such as 2-naphthalenesulfonyl chloride, or an optically active oxime such as 1-phenyl-1,1-propanedione-2-(O-ethoxycarbonyl)oxime.

The thickness of the substrate layer according to the present invention is not particularly limited and can be suitably selected according to purposes, for example, the kind and location of the adherend to be covered and protected. The thickness of the substrate layer is preferably 100 µm or larger, more preferably 150 µm or larger, and especially preferably 200 µm or larger. The thickness of the substrate layer is also preferably 1,000 µm or smaller, more preferably 750 µm or smaller, and especially preferably 500 µm or smaller. The thickness of the composite film constituting the substrate layer is preferably about 50 to 500 µm, and more preferably about 100 to 300 µm, in the case of, for example, a protective sheet for protecting a coating surface of a vehicle (motor vehicles).

The pressure-sensitive adhesive sheet of the present invention contains: a substrate layer containing a composite film; and a pressure-sensitive adhesive layer. That is, the pressure-sensitive adhesive sheet has the pressure-sensitive adhesive layer on one surface or each surface of the substrate layer. The pressure-sensitive adhesive agent forming the pressure-sensitive adhesive layer is not particularly limited, and a general pressure-sensitive adhesive agent such as a (meth)acrylic, urethane, rubber or silicone pressure-sensitive adhesive agent can be used. Among these, the acrylic pressure-sensitive adhesive agent is preferred when low-temperature adhesiveness, high-temperature holding properties, cost and the like are taken into account. The pressure-sensitive adhesive agent can appropriately contain a known cross-linking agent, tackifier, antioxidant, colorant, pulverulent body such as a pigment, dye, surfactant, plasticizer, surface lubricating agent, leveling agent, softener, anti-aging agent, photostabilizer, ultraviolet absorber, polymerization inhibitor, inorganic or organic filler, metal powder, granulous or foil-formed material, and the like. The method for forming the pressure-sensitive adhesive layer is not particularly limited, and a method in which a pressure-sensitive adhesive agent of the solvent or emulsion type is directly applied to a substrate and dried or a method in which the pressure-sensitive adhesives agent is applied to a release paper to form a pressure-sensitive adhesive layer beforehand and this pressure-sensitive adhesive layer is laminated to a composite film, may be used. A method in which a radioactive ray-curable pressure-sensitive adhesive agent is applied to a substrate and both the pressure-sensitive adhesive layer and the film are irradiated with radioactive ray to thereby simultaneously cure the substrate and the pressure-sensitive adhesive layer and form the pressure-sensitive adhesive layer may also be used. In this case, the pressure-sensitive adhesive layer and the substrate layer may be coated so as to result in a multilayer structure.

The thickness of the pressure-sensitive adhesive layer is not particularly limited and can be set arbitrarily, but usually, the thickness thereof is preferably 20 µm or larger, more preferably 30 µm or larger, and especially preferably 40 µm or larger. However, the upper limit thereof is generally preferably about 100 µm, more preferably 80 µm or smaller, and especially preferably 70 µm or smaller.

The substrate layer constituting the pressure-sensitive adhesive sheet of the present invention may comprises a surface coating layer formed on one surface of the film containing a urethane polymer (particularly, the composite film). However, it is required that the substrate layer containing the surface coating layer satisfies such conditions that (a) in the case where the substrate layer is elongated at a tensile speed of 200 mm/min, a work calculated from a product of a move amount and a stress until 10% elongation is 35 to 160 N· mm, and (b) in the case where the substrate layer is elongated until 10% at a tensile speed of 200 mm/min and the elongation is held in that state, a stress relaxation time for which the stress decreases to 36.8% of the maximum stress is 30 sec or less. The surface coating layer is preferably one containing fluorine resin, urethane resin, (meth)acryl resin, and/or (meth)acrylic monomer, from the standpoints of weather resistance, flexibility and the like. For example, a layer of a fluoroethylene vinyl ether may be preferably formed as the surface coating layer. By forming the surface coating layer, it become possible to impart properties such as glossiness, wear resistance, antifouling properties, water repellency, and chemical resistance and is effective also in inhibiting deterioration of the composite film itself. In the case where the substrate layer has a surface coating layer, the layer may have a configuration which contains a surface coating layer disposed on one surface of a composite film and a pressure-sensitive adhesive layer disposed on the other surface of the composite film.

The thickness of the surface coating layer is preferably 2 to 50 µm, more preferably 5 to 40 µm, and even more preferably 8 to 30 µm. In the case where the thickness of the surface coating layer is smaller than 2 µm, defect areas not covered by the surface coating layer, such as pin-holes, are likely to be formed and there are cases where the properties of the surface coating layer are not sufficiently exhibited. When the thickness thereof exceeds 50 µm, there are cases where the properties of this surface coating layer reduce the properties of the composite film.

In the present invention, the substrate layer may contain other film(s) laminated on one or each surface of the composite film, so long as it does not impair the effect of the present invention. Examples of the material constituting the other film include: thermoplastic resins, for example, polyester resins such as poly(ethylene terephthalate) (PET), polyolefin resins such as polyethylene (PE) and polypropylene (PP), polyimides (PI), polyether ether ketones (PEEK), poly(vinyl chloride) (PVC), poly(vinylidene chloride) resins, polyamide resins, polyurethane resins, polystyrene resins, acrylic resins, fluororesins, cellulosic resins, and polycarbonate resins; and thermosetting resins. In the case where the surface coating layer is to be formed, the surface coating layer is preferably disposed so as to be the outermost layer of the substrate layer.

In the present invention, the substrate layer satisfies such condition that (a) in the case where the substrate layer is elongated at a tensile speed of 200 mm/min, a work calculated from a product of a move amount and a stress until 10% elongation is 35 to 160 N· mm, preferably 38 to 150 N·mm, and especially preferably 40 to 140 N·mm. The tensile test may be conducted, for example, under conditions at 23°C. If the work of the substrate layer is less than 35 N·mm, since toughness of the film required in the adhesion operation cannot be sufficient, there is a problem in that the film is fully elongated. Whereas, if the work is more than 160 N·mm, since the flexibility of the film required in the adhesion operation cannot be ensured, there is a problem in that the fitting performance to bended portion become insufficient.

The work means a work in physics, and is defined by force × distance (= F·S). The work applied to an object can be represented by product of [force applied to the object] and [a move distance of the object], relates to a toughness of the material and may be taken as an index that displays a property of hardly broken by external force. In the pressure-sensitive adhesive sheet according to the present invention, when the sheet is adhering to an adherend so as to fit to bended surfaces having various shapes of the adherend while the sheet is stretched so that bubbles or wrinkles are not formed, an energy amount (toughness) applied to the pressure-sensitive adhesive sheet can be numerically and quantitatively measured, and the energy amount can be taken as an index of tenacity. In the case where this numerical value is low, there may be a problem in that the pressure-sensitive adhesive sheet is broken because the pressure-sensitive adhesive sheet cannot endure the energy amount applied to the pressure-sensitive adhesive sheet. In the case where this numerical value is excessively high, flexibility may be damaged and the fitting performance to bending portion may be not obtained. Therefore, there may be a problem in that the adhesion cannot be cleanly performed due to wrinkles or the like.

In the evaluation method of the work, as described in the following Examples in detail, the work may be set as an integration value until 10% elongation of a curve obtained by plotting a relationship between move amount (elongation) and stress (stress-strain curve, refer to FIG. 1) in the case where the elongation is performed at a tensile speed of 200 mm/min. An integration treatment of the stress-strain curve may be performed by commercially available analysis software.

In the present invention, the substrate layer further satisfies such condition that (b) a stress relaxation time, for which the stress after the substrate layer is elongated until 10% at a tensile speed of 200 mm/min and the elongation is held in that state decreases to 36.8% of the maximum stress, is 30 sec or less, preferably 28 sec or less, and especially preferably 25 sec or less (generally, 5 sec or more). The tensile test may be conducted, for example, under conditions at 23°C. If the stress relaxation time of the substrate layer is more than 30 sec, there is a problem in that lift-off of the pressure-sensitive adhesive sheet occurs when an end thereof is folded back.

The stress relaxation time is an index that indicates a time for which the maximum stress decreases to 1/e (36.8%) ("e" is a natural logarithm, and equals to 2.718). In the pressure-sensitive adhesive sheet of the present invention, the shorter the stress relaxation time is and the smaller the residual stress is, the more hardly the stress generated in adhesion operation remains and the more difficult a lift-off after the adhesion occurs.

In the evaluation method of the stress relaxation time, as described in the following Examples in detail, a time for which stress decreases to 36.8% of the maximum stress of the elongated state, is measured while measuring the stress while holding in a 10% elongated state after elongated until 10% at the tensile speed of 200 mm/min.

The pressure-sensitive adhesive sheet according to the present invention can exhibit the effect of the present invention by satisfying the above (a) work, and (b) stress relaxation time. Particularly, in the case where the sheet is used as a protective sheet, the substrate layer preferably has a breaking strength of 20 N/cm or more, more preferably 25 N/cm or more, and especially preferably 30 N/cm or more. However, in general, the breaking strength is preferably 300 N/cm or less, and more preferably 250 N/cm or less. In the above pressure-sensitive adhesive sheet, if the breaking strength is less than 20 N/cm, there may be a problem in that the pressure-sensitive adhesive sheet is broken.

In the case where the pressure-sensitive adhesive sheet of the present invention is used as the protective sheet, the substrate layer preferably has a breaking elongation of 50% or more, more preferably 75% or more, and especially preferably 100% or more. However, in general, the breaking elongation is preferably 200% or less, and more preferably 180% or less. In the pressure-sensitive adhesive sheet, if the breaking elongation is less than 50%, workability in the adhesion operation is decreased, thus causing incorporation of wrinkles or bubbles.

The pressure-sensitive adhesive sheet according to the present invention preferably has predetermined adhesion strength. For example, the adhesion strength with respect to the acrylic plate is preferably 2.0 N/cm or more, more preferably 3.0 N/cm or more, even more preferably 4.0 N/cm or more, and especially preferably 5.0 N/cm or more. However, in general, the adhesion strength is preferably 100 N/cm or less, and more preferably 70 N/cm or less. If the adhesion strength with respect to the acrylic plate of the pressure-sensitive adhesive sheet is 2.0 N/cm or more, the pressure-sensitive adhesive sheet can show a sufficient adhesive and can be adhered on an uneven surface or a curved portion such as a vinyl chloride-coated portion even under a low temperature environment. If the adhesion strength is excessively strong, it becomes difficult to replace the sheet when position misalignment occurs or dust or bubbles exists.

The pressure-sensitive adhesive sheet of the present invention may further contain an application sheet in addition to the substrate layer and the pressure-sensitive adhesive layer. The application sheet is effectively used in order to improve an adhesion workability of the pressure-sensitive adhesive sheet, for example, to determine an adhesion position. The application sheet is laminated on the opposite surface of the surface on which the pressure-sensitive adhesive layer is formed. In the case where the substrate layer contains the surface coating layer, the application sheet is laminated on the surface coating layer.

Examples of the application sheet for use in the present invention include a pressure-sensitive adhesive sheet obtained by applying a rubber pressure-sensitive adhesive agent, an acrylic pressure-sensitive adhesive or the like to a film containing an olefin resin such as polypropylene (PP) or polyethylene (PE), a vinyl chloride resin, or a polyester resin. Although a commercially available application sheet may be used, the pressure-sensitive adhesive sheet for protecting a coating surface which the sheet includes an application sheet is preferably adjusted so as to have a 10% modulus at 23°C of 35 N/cm or lower.

In the present invention, it is preferred that the application sheet is easily releasable after use. For example, the adhesion strength between the application sheet and the substrate layer is preferably 6.0 N/25 mm or lower, more preferably 4.5 N/25 mm or lower, and especially preferably 3.0 N/25 mm or lower. However, the adhesion strength is preferably 0.01 N/25 mm or higher, and more preferably 0.02 N/25 mm or higher. If the adhesion strength between the application sheet and the substrate layer is higher than 6.0 N/25 mm, there is a possibility that when the application sheet is released after this pressure-sensitive adhesive sheet is applied in a predetermined position on an adherend, the pressure-sensitive adhesive sheet may be lifted off from the adherend. If the adhesion strength thereof is lower than 0.01 N/25 mm, there is a possibility that the application sheet may be lifted off from the substrate layer before adhesion operation.

A process for manufacturing the pressure-sensitive adhesive sheet according to the present invention is described below. For example, a coating fluid for composite film formation is first applied to a release-treated surface of a release-treated poly(ethylene terephthalate) film (provisional support 1), a transparent separator or the like is placed thereon, the resultant is irradiated from above with ultraviolet rays to form a composite film, and the separator is removed thereafter. Separately, a coating fluid for pressure-sensitive adhesive layer formation is applied to a release-treated surface of a release-treated polyester film (provisional support 2), thereby forming a pressure-sensitive adhesive layer. Thereafter, this pressure-sensitive adhesive layer is superposed on the surface of the composite film. Thus a pressure-sensitive adhesive sheet for protecting a coating surface which the sheet contains a substrate layer and a pressure-sensitive adhesive layer can be obtained. The resulting layer configuration is release-treated poly(ethylene terephthalate) film (provisional support 1)/composite film/ pressure-sensitive adhesive layer/release-treated polyester film (provisional support 2). However, the provisional support 1 and the provisional support 2 are released and removed when this pressure-sensitive adhesive sheet is in use, i.e., when the pressure-sensitive adhesive sheet is applied, and hence are not especially contained in the configuration of the pressure-sensitive adhesive sheet for protecting a coating surface of the present invention. However, it is possible to suitably dispose the provisional support 1, the provisional support 2 and the like as necessarily, and such configurations are within the technical scope of the present invention.

In the case where the substrate layer according to the present invention contains a surface coating layer, in the formation of the substrate layer of the above manufacturing method, a coating fluid for surface coating layer formation is applied to the provisional support 1 to form a surface coating layer, subsequently a coating fluid for composite film formation is applied thereto, and then a separator or the like is placed thereon, thereby forming a composite film.

The pressure-sensitive adhesive sheet further containing an application sheet can be produced by producing the pressure-sensitive adhesive sheet containing a substrate layer and a pressure-sensitive adhesive layer in the same manner as described above, thereafter stripping and removing the provisional support 1 provisionally adhered to the substrate layer, and then laminating an application sheet to this surface of the substrate layer. In the case where the substrate layer is constituted of a composite film or the like alone, an application sheet is superposed on the surface of the composite film or the like. In the case where the substrate layer contains a surface coating layer, an application sheet is superposed on the surface coating layer.

The pressure-sensitive adhesive sheet according to the present invention can realize a pressure-sensitive adhesive sheet having excellent adhesion workability and fitting performance to bending portion. Since this pressure-sensitive adhesive sheet has excellent adhereability to a coating surface having complicated shapes, the pressure-sensitive adhesive sheet can be easily applied without including wrinkles or bubbles. Further, since this pressure-sensitive adhesive sheet has excellent fitting performance to bending portion, an end of the film is not lifted off when the sheet is adhered to a bending portion. Therefore, particularly, the pressure-sensitive adhesive sheet may be properly used as a protective sheet for protecting coating surfaces of the transport machinery such as motor vehicles, bikes, ships and airplanes.

### EXAMPLES

The present invention will be explained below in detail with reference to Examples, but the present invention should not be construed as being limited thereto. In the following Examples, "parts" means parts by weight and "%" means wt%, unless otherwise indicated. The measurement methods and evaluation methods used in the following Examples are shown below.

### (Measurement Methods and Evaluation Methods)

### (1) Work

The substrate layer in the state of having provisional supports attached thereto was cut into a size of 1 cm (width) x 13 cm (length), and then the provisional support 1 and a release-treated PET film were removed. A tensile test was conducted with using "Autograph ASG-50D" (manufactured by Shimadzu Corp.) as a tensile tester under conditions of a tensile speed of 200 mm/min, a chuck-to-chuck distance of 100 mm, and at 23°C, thus obtaining a stress-strain curve (refer to FIG. 1). From this curve, an integration value of the curve to 10% elongation was analyzed by "Kaleida Graph Ver.4 Integrate Area" manufactured by Hulinks Inc. to calculate the work.

### (2) Stress Relaxation Time

The substrate layer in the state of having provisional supports attached thereto was cut into a size of 1 cm (width) × 13 cm (length), and then the provisional support 1 and the release-treated PET film were removed. A tensile test was conducted with using "Autograph ASG-50D" (manufactured by Shimadzu Corp.) as a tensile tester under conditions of a tensile speed of 200 mm/min, a chuck-to-chuck distance of 100 mm, and at 23°C, thus measuring a shift of stress when the substrate layer was maintained in a state of 10% elongation (10 mm elongation). The time for which the stress decreased to a stress corresponding to 36.8% of the maximum stress of the elongation was set as the stress relaxation time.

### (3) Breaking Strength, Breaking Elongation

The substrate layer in the state of having provisional supports attached thereto was cut into a size of 1 cm (width) × 13 cm (length), and then the provisional support 1 and the release-treated PET film were removed. A tensile test was conducted with using "Autograph ASG-50D" (manufactured by Shimadzu Corp.) as a tensile tester under conditions of a tensile speed of 200 mm/min, a chuck-to-chuck distance of 100 mm, and at 23°C, thus obtaining a stress-strain curve and obtaining breaking strength and breaking elongation.

### (4) Adhereability

The pressure-sensitive adhesive sheet in the state of having provisional supports attached thereto was cut into a size of 1 cm (width) × 13 cm (length), and then the provisional support 1 and the provisional support 2 were removed. The pressure-sensitive adhesive layer surface of the pressure-sensitive adhesive sheet was superposed on a methacryl plate (Acrylite, manufactured by Mitsubishi Rayon Co., Ltd.) which had been washed with isopropyl alcohol, and this pressure-sensitive adhesive sheet was press-bound thereto with a hand roller. When the sample was able to be clearly adhered in alignment, adhereability of the sample was indicated by "A". When the sample adhered in a curved state, adhereability of the sample was indicated by "B".

### (5) Fitting Performance to Bending Portion

The pressure-sensitive adhesive sheet in the state of having provisional supports attached thereto was cut into a size of 1 cm (width) × 5 cm (length), and then the provisional support 1 and the provisional support 2 were removed. One end of the cut pressure-sensitive adhesive sheet was adhered, so as to result in an adhesion length of 1 mm, to a acrylic baking finish plate (one surface was white; steel plate thickness, 1.0 mm; manufactured by Nippon Testpanel Co., Ltd.) which had been washed with isopropyl alcohol, and the pressure-sensitive adhesive sheet was folded back in the 180° direction with respect to the steel plate surface while holding the other end. The pressure-sensitive adhesive sheet was held in this state for 1 hour, and whether lifting of the pressure-sensitive adhesive sheet from the coating surface had occurred or not was visually examined. The sample in which lifting of the pressure-sensitive adhesive sheet was unable to be observed was indicated by "A". The sample in which lifting of the pressure-sensitive adhesive sheet had occurred was indicated by "B".

### (Example 1)

### «Preparation of Coating Fluid for Composite Film Formation»

Into a reaction vessel equipped with a condenser, thermometer, and stirrer were introduced 5 parts of acrylic acid (AA), 35.5 parts of isobornyl acrylate (IBXA) and 9.5 parts of n-butyl acrylate (n-BA) as (meth)acrylic components, and 35.05 parts of polyoxytetramethylene glycol (PTMG) (number average molecular weight, 650; manufactured by Mitsubishi Chemical Corp.) as a polyol. While the mixture was being stirred, 14.95 parts of isophorone diisocyanate (IPDI) was added dropwise thereto and allowed to react at 65°C for 10 hours. Thereafter, 1.95 parts of 4-hydroxybutyl acrylate was added dropwise thereto and then allowed to react at 65°C for 1 hour. The used amount of the polyisocyanate component and the polyol component was 1.25 as NCO/OH (equivalent ratio).

Thereto were added 6 parts of trimethylolpropane triacrylate as a polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

### «Preparation of Coating Fluid for Surface Coating Layer Formation»

To 100 parts of a solution of fluoroethylene vinyl ether in xylene and toluene ("LF600", manufactured by Asahi Glass Co., Ltd.; solid content, 50% by weight) were added 10.15 parts of an isocyanate cross-linking agent ("Coronate HX", manufactured by Nippon Polyurethane Co., Ltd.) as a curing agent, 3.5 parts of a xylene-diluted solution of dibutyltin laurate (solid concentration, 0.01 %) as a catalyst, and 101 parts of toluene as a diluent solvent to prepare a coating fluid for surface coating layer formation (solid content, 28%).

### «Preparation of Substrate Layer»

The coating fluid for surface coating layer formation prepared was applied to a release-treated poly(ethylene terephthalate) film (thickness, 75 µm) as provisional support 1, and then dried and cured at a temperature of 140°C for 3 minutes to form a fluoroethylene vinyl ether layer. After the drying, the surface coating layer had a thickness of 10 µm.

The coating fluid for composite film formation prepared was applied to the surface coating layer obtained, in such amount so as to result in a thickness after curing of 192 µm, and the release-treated poly(ethylene terephthalate) (PET) film was superposed as a separator thereon. The PET film side was irradiated with ultraviolet rays using a metal halide lamp (luminance: 290 mW/cm²; irradiation amount: 4,600 mJ/cm²) to cure the coating fluid and thereby form a composite film (equipped with the surface coating layer) on the provisional support 1. Thereafter, the release-treated poly(ethylene terephthalate) film (separator) was removed, and dried at 120°C for 3 minutes to remove acrylic monomers remaining unreacted, thereby obtaining a substrate layer.

### «Preparation of Pressure-Sensitive Adhesive Layer»

To a mixture obtained by mixing 91 parts of 2-ethylhexyl acrylate, 4 parts of acrylic acid and 5 parts of isobornyl acrylate as monomer components were blended 0.05 parts of trade name "IRGACURE 651" (manufactured by BASF) and 0.05 parts of trade name "IRGACURE 184" (manufactured by BASF) as photopolymerization initiators. Thereafter, this mixture was irradiated with ultraviolet rays until the viscosity thereof reached about 20 Pa·s (measured by B type viscometer; rotor No.6; 60 rpm; measuring temperature of 23°C) to prepare a partially polymerized acrylic composition (UV syrup).

To 100 parts of the UV syrup obtained were added 0.5 parts of hexanediol diacrylate and 1 part of a hindered phenol type antioxidant (trade name "IRGANOX 1010", manufactured by BASF), thereby preparing a pressure-sensitive adhesive composition.

The pressure-sensitive adhesive composition was applied to the release-treated surface of a polyester film having a thickness of 75 µm as provisional support 2, in such amount so as to result in a thickness thereof in the final product of 50 µm.
A release-treated PET film was superposed thereon to cover the pressure-sensitive adhesive composition, and, subsequently, the PET film side was irradiated with ultraviolet rays using a metal halide lamp (luminance: 290 mW/cm²; irradiation amount: 4,600 mJ/cm²) to cure the pressure-sensitive adhesive composition, thereby forming a pressure-sensitive adhesive layer on the provisional support 2. Thereafter, the release-treated PET film was removed, and dried at 120°C for 3 minutes to remove acrylic monomers remaining unreacted, thereby obtaining the pressure-sensitive adhesive layer.

### «Production of Pressure-Sensitive Adhesive Sheet»

The pressure-sensitive adhesive layer was laminated to the substrate layer obtained above, so that the pressure-sensitive adhesive layer was superposed on the surface of the substrate layer on the opposite side from the surface coating layer, thereby producing a pressure-sensitive adhesive sheet (having the layer configuration: provisional support 1/surface coating layer/composite film/pressure-sensitive adhesive layer/provisional support 2).

### «Measurements and Evaluations»

The substrate layer and the pressure-sensitive adhesive sheet obtained were examined and evaluated for work, stress relaxation time, breaking strength, breaking elongation, adhereability, and fitting performance to bending portion according to the measurement methods and evaluation methods shown above. The results are described in Table 1.

### (Example 2)

A pressure-sensitive adhesive sheet was produced in the same manner as in Example 1, except that the coating fluid for composite film formation was replaced with the coating fluid shown below and the thickness of the composite film was changed to 204 µm.

### «Preparation of Coating Fluid for Composite Film Formation»

Into a reaction vessel equipped with a condenser, thermometer and stirrer were introduced 5 parts of acrylic acid (AA), 30 parts of isobornyl acrylate (IBXA) and 15 parts of n-butyl acrylate (n-BA) as (meth)acrylic components, and 35.04 parts of polyoxytetramethylene glycol (PTMG) (number average molecular weight, 650; manufactured by Mitsubishi Chemical Corp.) as a polyol. While the mixture was being stirred, 14.96 parts of isophorone diisocyanate (IPDI) was added dropwise thereto and allowed to react at 65°C for 10 hours. Thereafter, 3.11 parts of 4-hydroxybutyl acrylate was added dropwise thereto and then allowed to react at 65°C for 1 hour. The used amount of the polyisocyanate component and the polyol component was 1.25 as NCO/OH (equivalent ratio).

Thereto were added 9 parts of trimethylolpropane triacrylate as a polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 45/55.

The same measurements and evaluations as Example 1 were performed in respect to the obtained pressure-sensitive adhesive sheet. The results are described in Table 1.

### (Example 3)

A pressure-sensitive adhesive sheet was produced in the same manner as in Example 1, except that the coating fluid for composite film formation was replaced with the coating fluid shown below and that the thickness of the composite film was changed to 216 µm.

### «Preparation of Coating Fluid for Composite Film Formation»

Into a reaction vessel equipped with a condenser, thermometer, and stirrer were introduced 5 parts of acrylic acid (AA), 30 parts of isobornyl acrylate (IBXA) and 15 parts of t-butyl acrylate (t-BA) as (meth)acrylic components, and 35.46 parts of polyoxytetramethylene glycol (PTMG) (number average molecular weight, 650; manufactured by Mitsubishi Chemical Corp.) as a polyol. While the mixture was being stirred, 14.54 parts of isophorone diisocyanate (IPDI) was added dropwise thereto and allowed to react at 65°C for 10 hours. Thereafter, 2.52 parts of 4-hydroxybutyl acrylate was added dropwise thereto and then allowed to react at 65°C for 1 hour. The used amount of the polyisocyanate component and the polyol component was 1.20 as NCO/OH (equivalent ratio).

Thereto were added 9 parts of trimethylolpropane triacrylate as a polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 45/55.

The same measurements and evaluations as Example 1 were performed in respect to the obtained pressure-sensitive adhesive sheet. The results are described in Table 1.

### (Example 4)

A pressure-sensitive adhesive sheet was produced in the same manner as in Example 1, except that the coating fluid for composite film formation was replaced with the coating fluid shown below and that the thickness of the composite film was changed to 189 µm.

### «Preparation of Coating Fluid for Composite Film Formation»

Into a reaction vessel equipped with a condenser, thermometer, and stirrer were introduced 5 parts of acrylic acid (AA), 25 parts of isobornyl acrylate (IBXA) and 20 parts of n-butyl acrylate (n-BA) as (meth)acrylic components, and 34.63 parts of polyoxytetramethylene glycol (PTMG) (number average molecular weight, 650; manufactured by Mitsubishi Chemical Corp.) as a polyol. While the mixture was being stirred, 15.37 parts of isophorone diisocyanate (IPDI) was added dropwise thereto and allowed to react at 65°C for 10 hours. Thereafter, 1.09 parts of isophoronediamine (IPDA) and 2.77 parts of 4-hydroxybutyl acrylate were added dropwise thereto and then allowed to react at 65°C for 1 hour. The used amount of the polyisocyanate component and the polyol component was 1.30 as NCO/OH (equivalent ratio).

Thereto were added 6 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

The same measurements and evaluations as Example 1 were performed in respect to the obtained pressure-sensitive adhesive sheet. The results are described in Table 1.

### (Example 5)

A pressure-sensitive adhesive sheet was produced in the same manner as in Example 1, except that the coating fluid for composite film formation was replaced with the coating fluid shown below and that the thickness of the composite film was changed to 164 µm.

### «Preparation of Coating Fluid for Composite Film Formation»

Into a reaction vessel equipped with a condenser, thermometer, and stirrer were introduced 5 parts of acrylic acid (AA), 30 parts of isobornyl acrylate (IBXA) and 15 parts of n-butyl acrylate (n-BA) as (meth)acrylic components, and 16.67 parts of polyoxytetramethylene glycol (PTMG) (number-average molecular weight, 650; manufactured by Mitsubishi Chemical Corp.) and 20.52 parts of polycarbonatediol ("Duranol G3450J", number average molecular weight, 800; manufactured by Asahi Kasei Chemicals, Co., Ltd.) as polyols. While the mixture was being stirred, a mixture of 6.83 parts of isophorone diisocyanate (IPDI) and 5.98 parts of hydrogenated xylylene diisocyanate (HXDI) was added dropwise thereto and allowed to react at 65°C for 10 hours. Thereafter, 2.37 parts of 4-hydroxybutyl acrylate was added dropwise thereto and then allowed to react at 65°C for 1 hour. The used amount of the polyisocyanate component and the polyol component was 1.20 as NCO/OH (equivalent ratio).

Thereto were added 6 parts of trimethylolpropane triacrylate as a polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

The same measurements and evaluations as Example 1 were performed in respect to the obtained pressure-sensitive adhesive sheet. The results are described in Table 1.

### (Example 6)

A pressure-sensitive adhesive sheet was produced in the same manner as in Example 1, except that the coating fluid for composite film formation was replaced with the coating fluid shown below and that the thickness of the composite film was changed to 162 µm.

### «Preparation of Coating Fluid for Composite Film Formation»

Into a reaction vessel equipped with a condenser, thermometer, and stirrer were introduced 5 parts of acrylic acid (AA), 35 parts of isobornyl acrylate (IBXA) and 10 parts of n-butyl acrylate (n-BA) as (meth)acrylic components, and 16.21 parts of polyoxytetramethylene glycol (PTMG) (number average molecular weight, 650; manufactured by Mitsubishi Chemical Corp.) and 19.95 parts of polycarbonatediol ("Duranol G3450J", number average molecular weight, 800; manufactured by Asahi Kasei Chemicals, Co., Ltd.) as polyols. While the mixture was being stirred, 13.84 parts of isophorone diisocyanate (IPDI) was added dropwise thereto and allowed to react at 65°C for 10 hours. Thereafter, 0.85 parts of isophoronediamine (IPDA) and 2.16 parts of 4-hydroxybutyl acrylate were added dropwise thereto and then allowed to react at 65°C for 1 hour. The used amount of the polyisocyanate component and the polyol component was 1.25 as NCO/OH (equivalent ratio).

Thereto were added 9 parts of trimethylolpropane triacrylate as a polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 45/55.

The same measurements and evaluations as Example 1 were performed in respect to the obtained pressure-sensitive adhesive sheet. The results are described in Table 1.

### (Example 7)

A pressure-sensitive adhesive sheet was produced in the same manner as in Example 1, except that the coating fluid for composite film formation was replaced with the coating fluid shown below and that the thickness of the composite film was changed to 318 µm.

### «Preparation of Coating Fluid for Composite Film Formation»

Into a reaction vessel equipped with a condenser, thermometer and stirrer were introduced 5 parts of acrylic acid (AA), 35 parts of isobornyl acrylate (IBXA) and 10 parts of t-butyl acrylate (t-BA) as (meth)acrylic components, and 35.71 parts of polyoxytetramethylene glycol (PTMG) (number average molecular weight, 650; manufactured by Mitsubishi Chemical Corp.) as a polyol. While the mixture was being stirred, a mixture of 7.62 parts of isophorone diisocyanate (IPDI) and 6.67 parts of hydrogenated xylylene diisocyanate (HXDI) was added dropwise thereto and allowed to react at 65°C for 10 hours. Thereafter, 0.94 parts of isophoronediamine (IPDA) and 2.38 parts of 4-hydroxybutyl acrylate were added dropwise thereto and then allowed to react at 65°C for 1 hour. The used amount of the polyisocyanate component and the polyol component was 1.25 as NCO/OH (equivalent ratio).

Thereto were added 6 parts of trimethylolpropane triacrylate as the polyfunctional (meth)acrylic monomer and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

The same measurements and evaluations as Example 1 were performed in respect to the obtained pressure-sensitive adhesive sheet. The results are described in Table 1.

### (Comparative Example 1)

A pressure-sensitive adhesive sheet was produced in the same manner as in Example 1, except that the coating fluid for composite film formation was replaced with the coating fluid shown below and that the thickness of the composite film was changed to 150 µm.

### «Preparation of Coating Fluid for Composite Film Formation»

Into a reaction vessel equipped with a condenser, thermometer and stirrer were introduced 5 parts of acrylic acid (AA), 35.5 parts of isobornyl acrylate (IBXA) and 9.5 parts of n-butyl acrylate (n-BA) as (meth)acrylic components, and 36.40 parts of polyoxytetramethylene glycol (PTMG) (number average molecular weight, 650; manufactured by Mitsubishi Chemical Corp.) as a polyol. While the mixture was being stirred, 13.60 parts of hydrogenated xylylene diisocyanate (HXDI) was added dropwise thereto and allowed to react at 65°C for 10 hours. Thereafter, 2 parts of 4-hydroxybutyl acrylate was added dropwise thereto and then allowed to react at 65°C for 1 hour. The used amount of the polyisocyanate component and the polyol component was 1.25 as NCO/OH (equivalent ratio).

Thereto were added 3 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 48/52.

The same measurements and evaluations as Example 1 were performed in respect to the obtained pressure-sensitive adhesive sheet. The results are described in Table 1.

### (Comparative Example 2)

A pressure-sensitive adhesive sheet was produced in the same manner as in Example 1, except that the coating fluid for composite film formation was replaced with the coating fluid shown below and that the thickness of the composite film was changed to 157 µm.

### «Preparation of Coating Fluid for Composite Film Formation»

Into a reaction vessel equipped with a condenser, thermometer, and stirrer were introduced 5 parts of acrylic acid (AA), 35 parts of isobornyl acrylate (IBXA) and 10 parts of n-butyl acrylate (n-BA) as (meth)acrylic components, and 36.81 parts of polyoxytetramethylene glycol (PTMG) (number average molecular weight, 650; manufactured by Mitsubishi Chemical Corp.) as a polyol. While the mixture was being stirred, 13.19 parts of hydrogenated xylylene diisocyanate (HXDI) was added dropwise thereto and allowed to react at 65°C for 10 hours. Thereafter, 2.62 parts of 4-hydroxybutyl acrylate was added dropwise thereto and then allowed to react at 65°C for 1 hour. The used amount of the polyisocyanate component and the polyol component was 1.20 as NCO/OH (equivalent ratio).

Thereto were added 3 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 47/53.

The same measurements and evaluations as Example 1 were performed in respects to the obtained pressure-sensitive adhesive sheet. The results are described in Table 1.

### (Comparative Example 3)

A pressure-sensitive adhesive sheet was produced in the same manner as in Example 1, except that the coating fluid for composite film formation was replaced with the coating fluid shown below and that the thickness of the composite film was changed to 157 µm.

### «Preparation of Coating Fluid for Composite Film Formation»

Into a reaction vessel equipped with a condenser, thermometer, and stirrer were introduced 5 parts of acrylic acid (AA), 35 parts of isobornyl acrylate (IBXA) and 10 parts of t-butyl acrylate (t-BA) as (meth)acrylic components, and 19.53 parts of polyoxytetramethylene glycol (PTMG) (number average molecular weight, 650; manufactured by Mitsubishi Chemical Corp.) and 16.02 parts of polycarbonatediol ("Duranol G3450J", number average molecular weight, 800; manufactured by Asahi Kasei Chemicals, Co., Ltd.) as polyols. While the mixture was being stirred, 14.45 parts of isophorone diisocyanate (IPDI) was added dropwise thereto and allowed to react at 65°C for 10 hours. Thereafter, 3.47 parts of 4-hydroxybutyl acrylate was added dropwise thereto and then allowed to react at 65°C for 1 hour. The used amount of the polyisocyanate component and the polyol component was 1.30 as NCO/OH (equivalent ratio).

Thereto were added 3 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 47/53.

The same measurements and evaluations as Example 1 were performed in respect to the obtained pressure-sensitive adhesive sheet. The results are described in Table 1.

### (Comparative Example 4)

A pressure-sensitive adhesive sheet was produced in the same manner as in Example 1, except that the coating fluid for composite film formation was replaced with the coating fluid shown below and that the thickness of the composite film was changed to 167 µm.

### «Preparation of Coating Fluid for Composite Film Formation»

Into a reaction vessel equipped with a condenser, thermometer and stirrer were introduced 5 parts of acrylic acid (AA), 25 parts of isobornyl acrylate (IBXA) and 20 parts of n-butyl acrylate (n-BA) as (meth)acrylic components, and 19.53 parts of polyoxytetramethylene glycol (PTMG) (number average molecular weight, 650; manufactured by Mitsubishi Chemical Corp.) and 16.02 parts of polycarbonatediol ("Duranol G3450J", number average molecular weight, 800; manufactured by Asahi Kasei Chemicals, Co., Ltd.) as polyols. While the mixture was being stirred, a mixture of 7.15 parts of isophorone diisocyanate (IPDI) and 6.25 parts of hydrogenated xylylene diisocyanate (HXDI) was added dropwise thereto and allowed to react at 65°C for 10 hours. Thereafter, 2.98 parts of 4-hydroxybutyl acrylate was added dropwise thereto and then allowed to react at 65°C for 1 hour. The used amount of the polyisocyanate component and the polyol component was 1.25 as NCO/OH (equivalent ratio).

Thereto were added 3 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 47/53.

The same measurements and evaluations as Example 1 were performed in respect to the obtained pressure-sensitive adhesive sheet. The results are described in Table 1.

### (Comparative Example 5)

A pressure-sensitive adhesive sheet was produced in the same manner as in Example 1, except that the coating fluid for composite film formation was replaced with the coating fluid shown below and that the thickness of the composite film was changed to 167 µm.

### «Preparation of Coating Fluid for Composite Film Formation»

Into a reaction vessel equipped with a condenser, thermometer and stirrer were introduced 5 parts of acrylic acid (AA), 35 parts of isobornyl acrylate (IBXA) and 10 parts of 2-ethylhexylacrylate (2EHA) as (meth)acrylic components, and 16.63 parts of polyoxytetramethylene glycol (PTMG) (number average molecular weight, 650; manufactured by Mitsubishi Chemical Corp.) and 20.46 parts of polycarbonatediol ("Duranol G3450J", number average molecular weight, 800; manufactured by Asahi Kasei Chemicals, Co., Ltd.) as polyols. While the mixture was being stirred, 12.91 parts of hydrogenated xylylene diisocyanate (HXDI) was added dropwise thereto and allowed to react at 65°C for 10 hours. Thereafter, 3.54 parts of 4-hydroxybutyl acrylate was added dropwise thereto and then allowed to react at 65°C for 1 hour. The used amount of the polyisocyanate component and the polyol component used was 1.30 as NCO/OH (equivalent ratio).

Thereto were added 6 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

The same measurements and evaluations as Example 1 were performed in respect to the obtained pressure-sensitive adhesive sheet. The results are described in Table 1.

### (Comparative Example 6)

A pressure-sensitive adhesive sheet was produced in the same manner as in Example 1, except that the coating fluid for composite film formation was replaced with the coating fluid shown below and that the thickness of the composite film was changed to 161 µm.

### «Preparation of Coating Fluid for Composite Film Formation»

Into a reaction vessel equipped with a condenser, thermometer, and stirrer were introduced 5 parts of acrylic acid (AA), 25 parts of isobornyl acrylate (IBXA) and 20 parts of t-butyl acrylate (t-BA) as (meth)acrylic components, and 20.68 parts of polyoxytetramethylene glycol (PTMG) (number average molecular weight, 650; manufactured by Mitsubishi Chemical Corp.) and 16.97 parts ofpolycarbonatediol ("Duranol G3450J", number average molecular weight, 800; manufactured by Asahi Kasei Chemicals, Co., Ltd.) as polyols. While the mixture was being stirred, 12.35 parts of hydrogenated xylylene diisocyanate (HXDI) was added dropwise thereto and allowed to react at 65°C for 10 hours. Thereafter, 0.72 parts of isophoronediamine (IPDA) and 1.84 parts of 4-hydroxybutyl acrylate were added dropwise thereto and then allowed to react at 65°C for 1 hour. The used amount of the polyisocyanate component and the polyol component was 1.20 as NCO/OH (equivalent ratio).

Thereto were added 6 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 46/54.

The same measurements and evaluations as Example 1 were performed in respect to the obtained pressure-sensitive adhesive sheet. The results are described in Table 1.

### (Comparative Example 7)

A pressure-sensitive adhesive sheet was produced in the same manner as in Example 1, except that the coating fluid for composite film formation was replaced with the coating fluid shown below and that the thickness of the composite film was changed to 161 µm.

### «Preparation of Coating Fluid for Composite Film Formation»

Into a reaction vessel equipped with a condenser, thermometer and stirrer were introduced 5 parts of acrylic acid (AA), 30 parts of isobornyl acrylate (IBXA) and 15 parts of t-butyl acrylate (t-BA) as (meth)acrylic components, and 16.79 parts of polyoxytetramethylene glycol (PTMG) (number average molecular weight, 650; manufactured by Mitsubishi Chemical Corp.) and 20.67 parts of polycarbonatediol ("Duranol G3450J", number average molecular weight, 800; manufactured by Asahi Kasei Chemicals, Co., Ltd.) as polyols. While the mixture was being stirred, 12.54 parts of hydrogenated xylylene diisocyanate (HXDI) was added dropwise thereto and allowed to react at 65°C for 10 hours. Thereafter, 0.88 parts of isophoronediamine (IPDA) and 2.24 parts of 4-hydroxybutyl acrylate were added dropwise thereto and then allowed to react at 65°C for 1 hour. The used amount of the polyisocyanate component and the polyol component was 1.25 as NCO/OH (equivalent ratio).

Thereto were added 3 parts of trimethylolpropane triacrylate as a polyfunctional (meth)acrylic monomer, and 0.15 parts of bis(2,4,6-trimethylbenzoyl) phenylphosphine oxide ("IRGACURE 819", manufactured by BASF) as a photopolymerization initiator to thereby obtain a mixture of the urethane polymer and (meth)acrylic monomers (coating fluid for composite film formation). The weight ratio of the urethane polymer/acrylic monomer was 48/52.

The same measurements and evaluations as Example 1 were performed in respect to the obtained pressure-sensitive adhesive sheet. The results are described in Table 1.

**[TABLE 1]**

| | Work | Stress Relaxation Time | Breaking Strength | Breaking Elongation | Adhere-ability | Fitting Performance to Bending Portion |
|---|---|---|---|---|---|---|
| | N·mm | sec | N/ 10 mm | % | | |
| Ex. 1 | 42.1 | 12.3 | 25.4 | 117 | A | A |
| Ex. 2 | 47.6 | 22.9 | 37.2 | 106 | A | A |
| Ex. 3 | 110.3 | 19.6 | 74.2 | 135 | A | A |
| Ex. 4 | 45.1 | 11.0 | 46.9 | 133 | A | A |
| Ex. 5 | 130.9 | 18.2 | 38.2 | 96 | A | A |
| Ex. 6 | 65.3 | 17.5 | 47.6 | 134 | A | A |
| Ex. 7 | 106.1 | 15.3 | 76.3 | 169 | A | A |
| Comp. Ex. 1 | 33.3 | 10.0 | 22.3 | 169 | B | B |
| Comp. Ex. 2 | 16.3 | 6.8 | 32.8 | 120 | B | B |
| Comp. Ex. 3 | 351.2 | 15.1 | 49.8 | 103 | B | B |
| Comp. Ex. 4 | 24.2 | 9.8 | 20.9 | 162 | B | B |
| Comp. Ex. 5 | 24.2 | 39.6 | 45.3 | 25 | B | B |
| Comp. Ex. 6 | 256.4 | 51.2 | 40.5 | 55 | B | B |
| Comp. Ex. 7 | 196.5 | 31.7 | 36.1 | 105 | B | B |

As seen from Table 1, it was confirmed that in the pressure-sensitive adhesive sheets of Examples 1 to 7 according to the present invention, the corresponding substrate layers satisfied the conditions that (a) in the case where the substrate was elongated at a tensile speed of 200 mm/min, a work calculated from a product of a move amount and a stress until 10% elongation is 35 to 160 N·mm, and (b) in the case where the substrate layer was elongated until 10% at a tensile speed of 200 mm/min and the elongation was held in that state, a stress relaxation time for which the stress decreased to 36.8% of the maximum stress was 30 sec or less. And further, it was confirmed that the sheets of Examples 1 to 7 had excellent performance in views of the Applicability and fitting performance to bending portion.

Meanwhile, it could be seen that in Comparative Examples 1 to 7 in which the corresponding substrate layers had the work deviated from the range, the corresponding sheets had poor adhereability and fitting performance to bending portion.

While the present invention has been described in detail and with reference to the specific embodiments thereof, it will be apparent to one skilled in the art that various changes and modifications can be made therein without departing from the spirit and scope thereof.
The present application is based on Japanese Patent Application No. 2010-210285 filed on September 20, 2010, and the entire contents thereof are incorporated herein by reference. All references cited herein are incorporated in their entirety.

## Claims

1. A pressure-sensitive adhesive sheet comprising:
a substrate layer comprising a film which contains at least a urethane polymer; and
a pressure-sensitive adhesive layer,
wherein the substrate layer has:
(a) a work of 35 to 160 N·mm, the work being calculated from a product of a move amount and a stress until 10% elongation when the substrate layer is elongated at a tensile speed of 200 mm/min; and
(b) a stress relaxation time of 30 sec or less, the stress relaxation time being a time for which the stress, after the substrate layer is elongated until 10% at a tensile speed of 200 mm/min and the elongation is held in that state, decreases to 36.8% of the maximum stress.

2. The pressure-sensitive adhesive sheet according to claim 1,
wherein the film is a composite film containing a (meth)acrylic polymer and a urethane polymer.

3. The pressure-sensitive adhesive sheet according to claim 2,
wherein the (meth)acrylic polymer comprises: a (meth)acrylic component containing at least a (meth)acrylic acid monomer, and a monofunctional (meth)acrylic monomer in which a glass transition temperature (Tg) of a homopolymer thereof is 273 K or more; and a polyfunctional monomer, wherein the polyfunctional monomer is contained in an amount of 10 to 20 parts by weight on the basis of 100 parts by weight of the (meth)acrylic component, and
wherein the urethane polymer comprises a diol component and a diisocyanate component, and contains isophorone diisocyanate as the diisocyanate component.

4. The pressure-sensitive adhesive sheet according to claim 3,
wherein a content of the (meth)acrylic acid monomer is 0.5 wt% or more and 15 wt% or less in the composite film.

5. The pressure-sensitive adhesive sheet according to claim 3 or 4, wherein the monofunctional (meth)acrylic monomer in which a glass transition temperature (Tg) of a homopolymer thereof is 273 K or more is isobornyl acrylate.

6. The pressure-sensitive adhesive sheet according to any one of claims 2 to 5, wherein a weight ratio of the (meth)acrylic polymer and the urethane polymer is in a range of from 30/70 to 70/30.

7. The pressure-sensitive adhesive sheet according to any one of claims 1 to 6, wherein the substrate layer has a surface coating layer containing any one of fluorine resin, urethane resin, (meth)acryl resin, and (meth)acrylic monomer, on at least one surface.

8. The pressure-sensitive adhesive sheet according to any one of claims 1 to 7, wherein an application sheet is provided on at least one side of the pressure-sensitive adhesive sheet.

9. The pressure-sensitive adhesive sheet according to any one of claims 1 to 8, wherein the pressure-sensitive adhesive sheet is to be used as a protective sheet for protecting a surface of an adherend.

10. The pressure-sensitive adhesive sheet according to claim 9,
wherein the pressure-sensitive adhesive sheet is to be used as a protective sheet for protecting a coating surface of transport machinery.
